# EUROPEAN PATENT SPECIFICATION

(11) **EP 3 674 124 B1**
(45) Date of publication and mention of the grant of the patent: **02.03.2022**
(21) Application number: 18461657.1
(22) Date of filing: 24.12.2018
(51) Int. Cl.: B60K 11/00, B60K 11/02

(54) **A FAN SHROUD**
LÜFTERHAUBE
CARÉNAGE DE VENTILATEUR

(43) Date of publication of application: 01.07.2020
(73) Proprietor: VALEO AUTOSYSTEMY Sp. z o.o., 32-050 Skawina (PL)
(72) Inventor: GODZINA, Radoslaw, 32-050 Skawina (PL); BARUS, Lukasz, 32-050 Skawina (PL); SZOSTEK, Dawid, 32-050 Skawina (PL); JURKIEWICZ, Dawid, 32-050 Skawina (PL); HYPTA, Michal, 32-050 Skawina (PL)
(74) Representative: Valeo Systèmes Thermiques

(56) References cited:
- WO-A1-2007/141981
- KR-A- 20180 093 624

## Description

The present invention relates to a fan shroud for a vehicle.

A motor vehicle is commonly equipped with cooling systems arranged in its engine compartment. The heat engine is thus cooled by a supply of outside air. This outside air makes it possible to cool, via heat exchangers, a fluid circulating elsewhere in a thermal loop of the vehicle. These cooling systems, also called "cooling units" most often include at least one external air inlet generally disposed on the vehicle body, and for example at the front of the vehicle, one or several heat exchangers arranged on the path of the incoming air and a motor-fan unit for forcing the air supply for example when the vehicle is stopped.

The design of shroud in fan system often need the use the flaps to ensure proper air flow through cooling module.

Unfortunately using flaps impacts the stiffness of the shroud due to several holes called windows to allow air to flow.

The risk is to have weaken fan systems so that the displacement during the vibrations is out of the requirements or/and deformation or breaks occurs.

Patent application EP1855903 discloses a shroud with windows and flaps that are cutted out of a flexible film. WO 2007/141981 A1 discloses a fan shroud for a vehicle comprising a main wall, at least one window arranged for an air passage, this window being formed on the main wall. A flap is associated with this window arranged to close or open this window and at least one reinforcing rib is arranged to mechanically reinforce an area of the main wall adjacent to the window. The rib extends over the window and connects to two sides of the window.

The present invention aims to enhance shrouds with air flow windows.

The present invention relates to a fan shroud for a vehicle according to claim 1. Particular embodiments of the invention are defined by the features of the dependent claims.

The invention makes whole shroud more robust, and enables to reduce softening and allows the forces to be smoothly transferred through whole surface of a shroud with no discontinuity in the surface.

The amount of ribs, their direction and shape can be selected in function of the application.

An advantage is also that material used for shroud design could be reduced and in the same time improved stiffness would be reachable.

The invention also relates to a cooling unit having a fan shroud as claimed in one of the claims, and a fan motor unit.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 illustrates a schematic representation of a cooling unit;
FIG. 2 to 6 illustrate a shroud according to a first embodiment of the invention,
FIG. 7 illustrates a shroud according to a second embodiment of the invention.

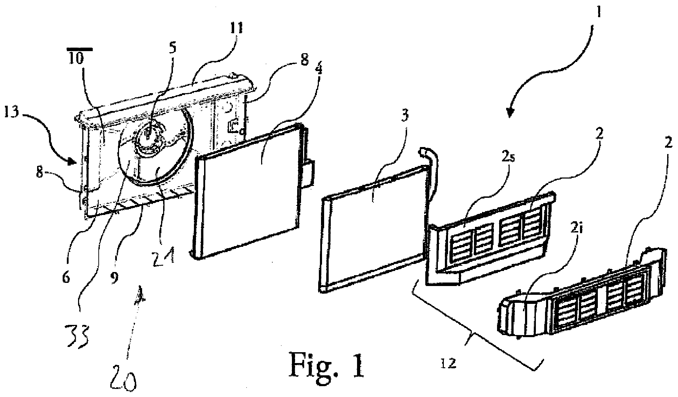

In Figure 1 are illustrated various elements that can be included in a cooling unit 1 to be integrated in a motor compartment of a vehicle according to the present invention. Such a cooling unit 1 may in particular comprise at least one device 2 for regulating the supply of air into the cooling unit 1, one or more stacked heat exchangers, among which, by way of non - limiting example, a condenser 3 and a radiator 4, and at least one motor-fan unit 5.

The device 2 for regulating the air intake can for example be made by a shell 2s, 2i with adjustable flaps as shown in FIG. I. This shell 2s, 2i comprises an upper part 2s and a lower part 2i fixed on one another and stalled relative to each other. This stall can in particular allow to have an additional heat exchanger.

The cooling unit 1 may comprise a first heat exchanger formed by a condenser 3 and a second heat exchanger formed by a radiator 4. The radiator 4 allows the cooling of the heat engine via an exchange between the outside air and a coolant circulating in the radiator 4 while the condenser 3 is an element of an air conditioning circuit with an exchange network between the incoming fresh air and a refrigerant.

The motor-fan unit 5 can be integrated in a shroud 6 and makes it possible to force the air inlet into the cooling unit 1 when this air supply is no longer sufficient, for example in certain situations in which the vehicle is at a standstill or at least idle. This shroud 6 may have two lateral elements 8, a lower edge 9 and a bottom wall 10 in which the motor fan unit 5 is integrated. A housing has at least one closure wall 11 which covers or closes a volume in which the heat exchangers are housed and which is defined by the arrangement of four peripheral walls, namely: a front transverse wall 12, a rear transverse wall 13, these transverse front and rear walls 12, 13 being arranged across a flow of air entering the vehicle, and two longitudinal walls left and right not shown here. The flow of air entering the vehicle thus passes successively through the front transverse wall 12 of the housing, one or more heat exchangers 3, 4 stacked and finally the rear transverse wall 13 of the housing. The transverse front wall 12 of the housing corresponds to the shell 2s, 2i in which can be integrated the device 2 for regulating the air inlet and the rear transverse wall 13 of the housing carries the motor-fan unit 5. A ventilation device 20 comprises the rear transverse wall 13 and the motor-fan unit 5.

The shroud 6 has an opening 33 of substantially circular shape for the passage of air 21 and the housing for the motor-fan unit is disposed substantially in the center of this opening.

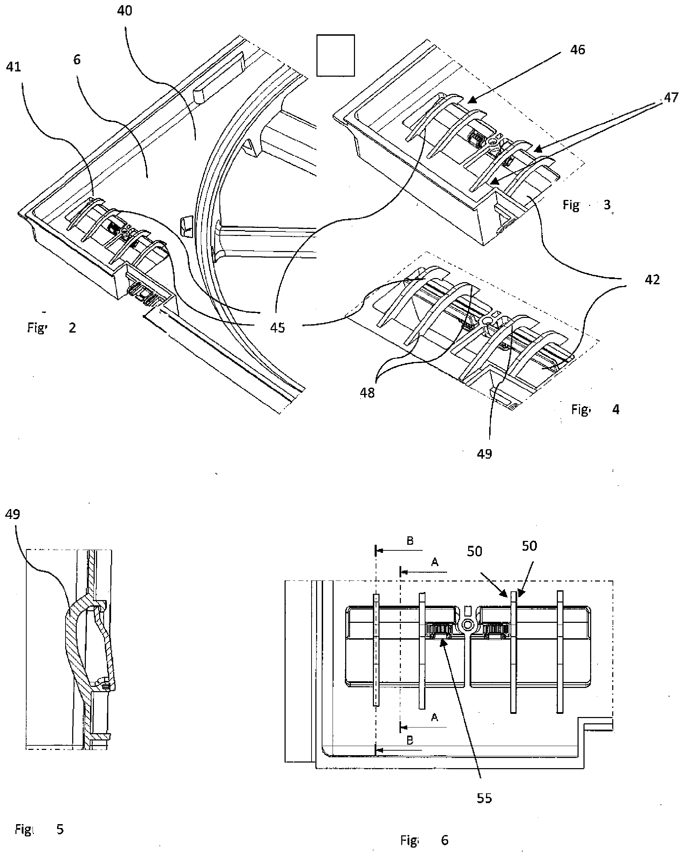

As illustrated in Figures 2 to 6, the fan shroud 6 comprises: a main wall 40, at least one window 41 arranged for an air passage, this window being formed on the main wall 40, a flap 42 associated with this window 41 arranged to close or open this window 41,reinforcing ribs 45 arranged to mechanically reinforce an area 46 of the main wall adjacent to the window. The ribs 45 extend over the window 41 and each connect to two sides 47 of the window.

The two sides 47 between which the reinforcing rib extends are two opposite sides of the window 41.

The window 41 has a rectangular shape and the two sides 47 between which the reinforcement ribs 45 extends are two opposite sides of this rectangle.

The ribs 45 are perpendicular to both edges 47 of the window.

The ribs 45 each have legs 48 each connected to one edge 47 side of the window.

Thus the ribs 45 have an extent substantially similar to a window dimension.

For example, the rib does not have junction points with the main wall that are remote from the window.

Alternatively, these junction points are remote from the window, so that the rib has a greater span than the window.

Each rib 45 has an arcuate shape so that the distance between the plane of the window 41 and the rib 45 is variable.

The point 49 of the rib 45 furthest from the plane of the window, which point may be considered as a top of the rib, is closer to one side of the window than to the other side 47 on which the rib 45 connects.

The top 49 of the rib is rounded.

Each rib 45 has two parallel flanks 50 which are in particular perpendicular to the plane of the window 41.

Ribs 45 extends parallel to a side edge of the window.

The shroud 6 has several ribs 45 for each window 41.

These ribs in a number of 4 are parallel to each other.

The ribs of one of the windows are identical.

The flap 42 is hinged to main wall 40, via spring effort effect of a spring 55 to close the window 41 if air pressure is under a certain value.

In figure 3, the flap 42 is closed.

In figure 4, the flap 42 is open.

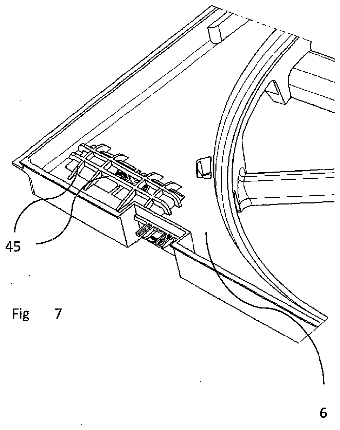

In another embodiment of the invention illustrated in Figure 7, the ribs 45 of each window 41 have ribs 45 that intersect with each other.

The ribs 45 intersect at right angles.

The ribs 45 comprise for example two parallel ribs which intersect with four other parallel ribs.

Some ribs 45 may have a rectilinear central region, and not rounded.

The ribs 45 are made in one piece with the main wall 40, in particular being molded together.

According to one aspect of the invention, the material of the main wall and the ribs is in particular a plastic material.

## Claims

1. A fan shroud (6) for a vehicle comprising:
• a main wall (40),
• at least one window (41) arranged for an air passage, this window (41) being formed on the main wall (40),
• a flap (42) associated with this window (41) arranged to close or open this window (41),
• at least one reinforcing rib (45) arranged to mechanically reinforce an area (46) of the main wall (40) adjacent to the window (41), and wherein the rib (45) extends over the window (41) and connects to two sides (47) of the window (41), **characterized in that** the rib (45) has an arcuate shape so that the distance between the plane of the window (41) and the rib (45) is variable.

2. A fan shroud (6) according to claim 1, wherein the window (41) has a rectangular shape, and the two sides (47) between which the reinforcement rib (45) extends are two opposite sides of this rectangle.

3. A fan shroud (6) according to any preceding claims, wherein the rib (45) has legs (48) each connected to one edge (47) side of the window (41).

4. A fan shroud (6) according to any preceding claims, wherein the rib (45) does not have junction points with the main wall (40) that are remote from the window (41).

5. A fan shroud (6) according to any preceding claims, wherein the shroud (6) has several ribs (45) for each window (41).

6. A fan shroud (6) according to any preceding claims, wherein the ribs (45) of one of the windows (41) have ribs (45) that intersect with each other.

7. A fan shroud (6) according to any preceding claims, wherein the rib (45) or ribs (45) are made in one piece with the main wall (40), in particular being molded together.

8. A cooling unit (1) having a fan shroud (6) as claimed in one of the preceding claims, and a fan motor unit (5).

## Patentansprüche

1. Lüfterzarge (6) für ein Fahrzeug, umfassend:
• eine Hauptwand (40),
• mindestens ein Fenster (41), das für einen Luftdurchgang angeordnet ist, wobei dieses Fenster (41) an der Hauptwand (40) ausgebildet ist,
• eine Klappe (42), die diesem Fenster (41) zugeordnet und dazu angeordnet ist, dieses Fenster (41) zu schließen oder zu öffnen,
• mindestens eine Verstärkungsrippe (45), die dazu angeordnet ist, einen dem Fenster (41) benachbarten Bereich (46) der Hauptwand (40) zu verstärken, und wobei sich die Rippe (45) über das Fenster (41) erstreckt und mit zwei Seiten (47) des Fensters (41) verbunden ist, **dadurch gekennzeichnet, dass** die Rippe (45) bogenförmig ist, so dass der Abstand zwischen der Ebene des Fensters (41) und der Rippe (45) variabel ist.

2. Lüfterzarge (6) nach Anspruch 1, wobei das Fenster (41) rechteckig ist und die beiden Seiten (47), zwischen denen sich die Verstärkungsrippe (45) erstreckt, zwei gegenüberliegende Seiten dieses Rechtecks sind.

3. Lüfterzarge (6) nach einem der vorhergehenden Ansprüche, wobei die Rippe (45) Schenkel (48) hat, die jeweils mit einer Randseite (47) des Fensters (41) verbunden sind.

4. Lüfterzarge (6) nach einem der vorhergehenden Ansprüche, wobei die Rippe (45) keine Verbindungspunkte mit der Hauptwand (40) hat, die von dem Fenster (41) entfernt sind.

5. Lüfterzarge (6) nach einem der vorhergehenden Ansprüche, wobei die Zarge (6) mehrere Rippen (45) für jedes Fenster (41) hat.

6. Lüfterzarge (6) nach einem der vorhergehenden Ansprüche, wobei die Rippen (45) eines der Fenster (41) Rippen (45) haben, die einander kreuzen.

7. Lüfterzarge (6) nach einem der vorhergehenden Ansprüche, wobei die Rippe (45) oder die Rippen (45) einstückig mit der Hauptwand (40) hergestellt, insbesondere miteinander geformt sind.

8. Kühleinheit (1) mit einer Lüfterzarge (6) nach einem der vorhergehenden Ansprüche und einer Lüftermotoreinheit (5).

## Revendications

1. Carénage de ventilateur (6) pour véhicule comprenant :
une paroi principale (40),
au moins une fenêtre (41) conçue pour un passage d'air, cette fenêtre (41) étant formée sur la paroi principale (40),
un volet (42) associé à cette fenêtre (41) conçu pour fermer ou ouvrir cette fenêtre (41),
au moins une nervure de renfort (45) conçue pour renforcer mécaniquement une zone (46) de la paroi principale (40) adjacente à la fenêtre (41), et la nervure (45) s'étendant sur la fenêtre (41) et étant reliée à deux côtés (47) de la fenêtre (41), **caractérisé en ce que** la nervure (45) a une forme arquée de sorte que la distance entre le plan de la fenêtre (41) et la nervure (45) soit variable.

2. Carénage de ventilateur (6) selon la revendication 1, la fenêtre (41) ayant une forme rectangulaire, et les deux côtés (47) entre lesquels s'étend la nervure de renfort (45) étant deux côtés opposés de ce rectangle.

3. Carénage de ventilateur (6) selon l'une quelconque des revendications précédentes, la nervure (45) ayant des pattes (48) reliées chacune à un côté du bord (47) de la fenêtre (41).

4. Carénage de ventilateur (6) selon l'une quelconque des revendications précédentes, la nervure (45) n'ayant pas de points de jonction avec la paroi principale (40) qui sont éloignés de la fenêtre (41).

5. Carénage de ventilateur (6) selon l'une quelconque des revendications précédentes, le carénage (6) ayant plusieurs nervures (45) pour chaque fenêtre (41).

6. Carénage de ventilateur (6) selon l'une quelconque des revendications précédentes, les nervures (45) de l'une des fenêtres (41) ayant des nervures (45) qui se coupent les unes les autres.

7. Carénage de ventilateur (6) selon l'une quelconque des revendications précédentes, la nervure (45) ou les nervures (45) étant réalisées d'un seul tenant avec la paroi principale (40), notamment étant moulées ensemble.

8. Unité de refroidissement (1) ayant un carénage de ventilateur (6) selon l'une des revendications précédentes, et une unité de moteur de ventilateur (5).
